# EUROPÄISCHE PATENTSCHRIFT

(11) **EP 0 416 151 B1**
(45) Veröffentlichungstag und Bekanntmachung des Hinweises auf die Patenterteilung: **14.04.1993**
(21) Anmeldenummer: 89116534.2
(22) Anmeldetag: 07.09.1989
(51) Int. Cl.: B24B 19/02, B23G 1/36, B24B 41/04

(54) **Schleifkopf zur Herstellung von Innenprofilen**
Grinding head for producing internal profiles
Tête de meulage pour la production de profils internes

(43) Veröffentlichungstag der Anmeldung: 13.03.1991
(73) Patentinhaber: Kapp GmbH, D-96450 Coburg (DE)
(72) Erfinder: Lorenz, Manfred, Dipl.-Ing. (FH), D-8630 Coburg (DE)
(74) Vertreter: Stenger, Watzke & Ring Patentanwälte

(56) Entgegenhaltungen:
- DE-C- 620 052
- FR-A- 2 332 100
- GB-A- 1 057 420
- JP-A-56 134 129

## Beschreibung

Die Erfindung betrifft einen Schleifkopf zur Herstellung von Innenprofilen, insbesondere von innenliegenden Schrägverzahnungen, mit einer am vorderen Ende eines stabförmigen Schleifarmes unter dem jeweiligen Schrägungswinkel des herzustellenden Innenprofils angeordneten Schleifscheibe, die von einer am anderen Ende des Schleifarms angeordneten Antriebswelle durch einen durch den Schleifarm verlaufenden Riemen antreibbar und auf einer Schleifspindel angeordnet ist, die mit ihren Lagern verschwenkbar am Schleifarm gelagert ist.

Für die Herstellung von Innenprofilen sind verschiedene Schleifkopf-Konstruktionen bekannt. Die DE-C-25 52 259 reigt beispielsweise einen Schleifarm zum Schleifen von innenliegenden, axial verlaufenden Profilen, bei dem die Schleifscheibe auf einer Welle angeordnet ist, die rechtwinklig zur Längsachse des Schleifarmes feststehend im gekepselten Schleifarm gelagert ist und von eines Zahnriemen angetrieben wird. Aus der EP-A-182 158 ist ein ähnlicher Schleifarm bekannt, dessen Schleifscheibe jedoch durch eine längs im Schleifarm verlaufende Welle über ein Schraubgetriebe angetrieben wird. Mit diesen bekannten Konstruktionen lassen sich im wesentlichen nur axial verlaufende Innenprofile bzw. unter einem geringen Winkel zur Längsachse geneigte Profile schleifen.

Um auch innenliegende Schrägverzahnungen schleifen zu können, sind Schleifarme bekannt, bei denen die Schleifscheibe am Ende einer axial im Schleifarm verlaufenden Schleifspindel angeordnet ist. Durch Schrägstellung des Schleifarmes im Verhältnis zur Längsachse des Werkstückes lassen sich hierbei auch Innenprofile schleifen, die schräg zur Längsachse des Werkstückes verlaufen, wie beispielsweise Schrägverzahnungen. Eine solche Schleifkopf-Konstruktion zeigt beispielsweise die JP-A-56-134 129.

Wenn derartige Schrägverzahnungen in Werkstücken geschliffen werden sollen, die eine große axiale Erstreckung, aber einen geringen Innendurchmesser aufweisen, ergibt sich das Problem, daß der Schleifarm aufgrund seiner Schrägstellung zur Werkstücklängsachse mit der Wandung des zu bearbeitenden Werkstückes kollidiert, wenn auch in größerer Werkstücktiefe geschliffen werden soll. Zur Lösung dieses Problems sind zwei unterschiedliche Konstruktionen bekannt.

Zum einen ist es möglich, die Schleifspindel entweder achsparallel oder unter einem Schleifwinkel in des Werkstück einzuführen, der kleiner als der Steigungswinkel des zu schleifenden Innenprofils ist. Die Differenz zwischen dem zu schleifenden Steigungswinkel und dem zwischen der Werkstücklängsachse und der Schleifspindel gebildeten Schleifwinkel wird durch eine Korrektur des Schleifscheibenprofils ausgeglichen. Derartige Schleifköpfe sind sowohl aus der JP-A-57-83 320 als auch aus der DE-A-36 24 472 bekannt.

Die zweite Lösungsmöglichkeit des voranstehend geschilderten Problems bei der Herstellung von innenliegenden Schrägverzahnungen besteht darin, daß die Schleifscheibe am vorderen Ende des stabförmigen Schleifarmes unter des jeweiligen Schrägungswinkels des herzustellenden Innenprofils angeordnet wird. Diese Lösung zeigen die GB-A-1 057 420 und die DE-C-620 052.

Hierbei besitzt die Schleifscheibe exakt das am Werkstück zu schleifende Profil, benötigt also keine Profilkorrektur.

Der Antrieb der Schleifscheibe erfolgt bei der Konstruktion nach der GB-A-1 057 420 durch eine längs im stabförmigen Schleifarm verlaufende Welle, die an ihrem vorderen Ende über eine Art Kardangelenk die auf einem nabenartigen Tragkörper angeordnete Schleifscheibe antreibt. Abgesehen davon, daß ein derartiger Antrieb der Schleifscheibe über ein Kardangelenk eine Realisierung der heutigen hohen Drehzahlen derartiger Schleifscheiben nicht zuläßt, besitzt die aus der GB-A-1 057 420 bekannte Konstruktion den Nachteil, daß zwecks Anpassung der Schleifscheibe an den jeweiligen Schrägungswinkel des herzustellenden Innenprofils der gesamte Schleifkopf demontiert werden muß, um eine die jeweilige Schrägstellung der Schleifscheibe ergebende Lagerbuchse gegen eine entsprechende Buchse mit abweichendem Schrägungswinkel auszutauschen.

Bei dem aus der DE-C-620 052 bekannten Schieifkopf wird zum Antrieb der Schleifscheibe ein Elektromotor verwendet, dessen Drehachse parallel zur Längsachse des Schleifarmes vorläuft. Die Kraftübertregung zwischen diesem Elektromotor und der Schleifscheibe erfolgt über einen im Querschnitt kreisförmigen Riemen, der über eine Mehrzahl von Umlenkrollen die Schleifspindel antreibt. Hierbei treten mehrfache krasse Kraftumlenkungen im Reimenverlauf auf, die es ausschließen, einen Riemen zu verwenden, der eine formschlüssige Kraftübertragung ermöglicht. Die Leistungsübertragung des bekannten Schleifkopfes ist damit erheblich eingeschränkt. Außerdem läßt sich bei der bekannten Konstruktion das Auftreten von Schlupf und damit eines erheblichen Verschleißes nicht vermeiden.

Der Erfindung liegt ausgehend von der eingangs genannten, aus der DE-C-620 052 bekannten Konstruktion die Aufgabe zugrunde, einen Schleifkopf zur Herstellung von Innenprofilen zu schaffen, dessen mit einem unkorrigierten Profil versehene Schleifscheibe auf einfache Weise dem jeweiligen Schrägungswinkel des herzustellenden Innenprofils angepaßt und auch mit hohen Drehzahlen und geringen Energieverlusten angetrieben werden kann.

Die Lösung dieser Aufgabenstellung durch die Erfindung ist dadurch gekennzeichnet, daß der Riemen mittels jeweils eines Riemenrades die Antriebswelle mit einer im vorderen Ende des Schleifarms gelagerten Zwischenwelle verbindet und daß die Schleifscheibe über ein Zahnradpaar von der Zwischenwelle antreibbar und um die Drehachse der Zwischenwelle verschwenkbar am Schleifarm gelagert ist.

Mit diesem erfindungsgemäßen Vorschlag wird ein Schleifkopf zur Herstellung von Innenprofilen, insbesondere von innenliegenden Schrägverzahnungen geschaffen, dessen Schleifscheibe mit einem dem jeweils herzustellenden Profil entsprechenden Profil ausgebildet ist und verlustarm auch mit hohen Drehzahlen angetrieben werden kann. Die Schleifscheibe kann durch Verschwenken der sie tragenden Schleifspindel relativ zum Schleifarm auf einfache Weise dem Schrägungswinkel des jeweils herzustellenden Innenprofils angepaßt werden, ohne daß irgendwelche Demontagearbeiten notwendig sind. Mit dem erfindungsgemäßen Vorschlag ergibt sich somit ein Schleifkopf, der neben einem aufgrund einfacher Konstruktion verlustarmen Antrieb eine einfache und schnelle Anpaßbarkeit der Schrägstellung der Schleifscheibe an den Schrägungswinkel des jeweils herzustellenden Innenprofils ermöglicht.

Bei einer bevorzugten Weiterbildung des erfindungsgemäßen Schleifkopfes wird der Riemen als Zahnriemen ausgebildet; die die Zwischenwelle mit der Schleifspindel verbindenden Zahnräder können als Schraubenräder oder Kegelräder ausgebildet sein.

Um auch bei hohen Drehzahlen eine zuverlässige Funktion des erfindungsgemäßen Schleifkopfes zu gewährleisten, ist eine die Lager der Zwischenwelle und der Schleifspindel sowie die Zahnräder durch Druckluft mit Kühlöl versorgende Frischölkühlung vorgesehen.

Auf der Zeichnung ist ein Ausführungsbeispiel eines erfindungsgemäßen Schleifkopfes schematisch dargestellt, und zwar zeigen:
- Fig. 1: eine teilweise geschnittene, schematische Seitenansicht eines Schleifkopfes und
- Fig. 2: eine schematische Draufsicht auf den Schleifkopf nach Fig.1, ebenfalls teilweise im Schnitt.

Der Schleifkopf umfaßt einen an einer nicht dargestellten Schleifmaschine zu befestigenden Schleifarm 1, der stabförmig ausgebildet ist und auf der Zeichnung verkürzt dargestellt wurde. An einem Ende dieses Schleifarmes 1 ist eine Antriebswelle 2 mittels eines Doppelkugellagers 3 drehbar gelagert, auf der ein Riemenrad 4 befestigt ist.

Im anderen Ende des Schleifarmes 1 ist parallel zur Antriebswelle 2 mittels zweier Kugellager 5 eine Zwischenwelle 6 drehbar gelagert, die ebenfalls ein Riemenrad 7 trägt. Die beiden Riemenräder 4 und 7 sind durch einen vorzugsweise als Zahnriemen ausgebildeten Riemen 8 miteinander verbunden.

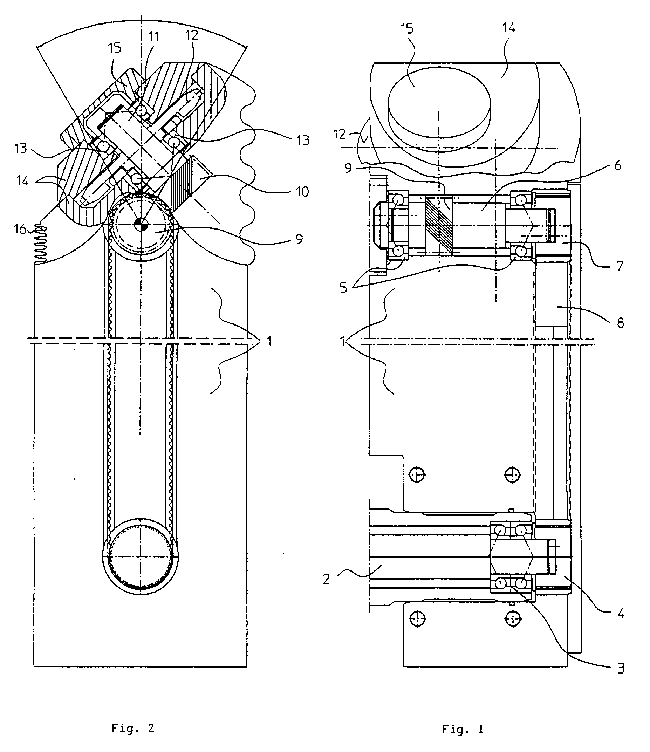

Auf der Zwischenwelle 6 ist ein Zahnrad 9 befestigt, das als Schraubenrad oder Kegelrad ausgebildet ist. Mit diesem Zahnrad 9 kämmt ein weiteres Zahnrad 10, das in Fig.2 zu erkennen ist und das entsprechend dem Zahnrad 9 als Schrauben- oder Kegelrad ausgeführt ist.

Dieses Zahnrad 10 ist seinerseits auf einer Schleifspindel 11 befestigt, welche eine Schleifscheibe 12 trägt und ihrerseits mittels zweier Kugellager 13 drehbar in einem Lagerstück 14 gelagert ist, das um den Mittelpunkt des auf der Zwischenwelle 6 angeordneten Zahnrades 9 verschwenkbar am Schleifarm 1 gelagert ist. Die Verschwenkbarkeit des Lagerstückes 14 gegenüber dem Schleifarm 1 ist durch den Doppelpfeil in Fig.2 angedeutet. Die Fig.2 zeigt weiterhin, daß das Lagerstück 14 zweiteilig ausgeführt ist und zusätzlich einen Deckel 15 zur Abdeckung des äußeren Kugellagers 13 aufweist. Zwischen Lagerstück 14 und Schleifarm 1 ist gemäß Fig.2 ein Faltenbalg 16 angeordnet, um einerseits den Eintritt von Schleifspänen und Schmutz in das Innere des Schleifarmes 1 und andererseits einen unerwünschten Austritt von Kühlöl zu verhindern, das mittels Druckluft zu den Lagern 5 der Zwischenwelle 6, den Lagern 13 der Schleifspindel 11 und zu den Zahnrädern 9 und 10 geführt wird.

Durch die Verschwenkbarkeit des die Schleifspindel 11 mit der Schleifscheibe 12 lagernden Lagerstückes 14 relativ zum Schleifarm 1 ist es möglich, die Schleifscheibe 12 mittels auf der Zeichnung nicht dargestellter Maßnahmen auf den jeweiligen Schrägungswinkel des herzustellenden Innenprofils einzustellen. Da die Verschwenkbewegung um den Mittelpunkt des auf der Zwischenwelle 6 angeordneten Zahnrades 9, d.h. um die Drehachse der Zwischenwelle 6 erfolgt, tritt keine Änderung des Zahneingriffes zwischen den Zahnrädern 9 und 10 ein. Es ist somit lediglich erforderlich, das Lagerstück 14 auf den jeweils erforderlichen Schrägungswinkel einzustellen und in der gewählten Stellung festzulegen.

Wie die lediglich schematische Darstellung des Ausführungsbeispiels in den Figuren 1 und 2 erkennen läßt, besteht der voranstehend beschriebene Schleifkopf aus einer geringen Anzahl einfacher Bauteile, wobei sowohl die Schleifspindel 11 als auch die Zwischenwelle 6 zuverlässig gelagert sind, so daß mit dem beschriebenen Schleifkopf hohe Drehzahlen der Schleifscheibe 12 erzielt werden können. Der zum Antrieb der Zwischenwelle 6 zwischen Antriebswelle 2 und Zwischenwelle 6 verwendete Zahnriemen stellt eine verlustarme Übertragung der Drehbewegung der Antriebswelle 2 auf die Zwischenwelle 6 dar und kann raumsparend im Inneren des Schleifarmes 1 untergebracht werden, der somit insgesamt mit einem geringen Querschnitt hergestellt werden kann, so daß Innenprofile auch an Werkstücken mit kleinem Innendurchmesser und großer Tiefe bearbeitet werden können, und zwar unter jedem beliebigen Schrägungswinkel des herzustellenden Innenprofils, insbesondere von Schrägverzahnungen.

## Patentansprüche

1. Schleifkopf zur Herstellung von Innenprofilen, insbesondere von innenliegenden Schrägverzahnungen, mit einer am vorderen Ende eines stabförmigen Schleifarmens (1) unter dem jeweiligen Schrägungswinkel des herzustellenden Innenprofils angeordneten Schleifscheibe (12), die von einer am anderen Ende des Schleifarmes (1) angeordneten Antriebswelle (2) durch einen durch den Schleifarm (1) verlaufenden Riemen (8) antreibbar und auf einer Schleifspindel (11) angeordnet ist, die mit ihren Lagern (13) verschwenkbar am Schleifarm (1) gelagert ist,
**dadurch gekennzeichnet,**
daß der Riemen (8) mittels jeweils eines Riemenrades (4,7) die Antriebswelle (2) mit einer im vorderen Ende des Schleifarms (1) gelagerten Zwischenwelle (6) verbindet und daß die Schleifscheibe (12) über ein Zahnradpaar (9,10) von der Zwischenwelle (6) antreibbar und um die Drehachse der Zwischenwelle (6) verschwenkbar am Schleifarm (1) gelagert ist.

2. Schleifkopf nach Anspruch 1, dadurch gekennzeichnet, daß der Riemen (8) als Zahnriemen ausgebildet ist.

3. Schleifkopf nach Anspruch 1 oder 2, dadurch gekennzeichnet, daß die Zahnräder (9,10) als Schraubenräder ausgebildet sind.

4. Schleifkopf nach Anspruch 1 oder 2, dadurch gekennzeichnet, daß die Zahnräder (9,10) als Kegelräder ausgebildet sind.

5. Schleifkopf nach mindestens einem der Ansprüche 1 bis 4, gekennzeichnet durch eine die Lager (5,13) der Zwischenwelle (6) und der Schleifspindel (11) sowie die Zahnräder (9,10) durch Druckluft mit Kühlöl versorgende Frischölkühlung.

## Claims

1. Grinding head for producing inner profiles, in particular internal helical tooth systems, having a grinding wheel (12) which is arranged at the front end of a bar-shaped grinding arm (1) at the respective helix angle of the inner profile to be produced, can be driven from a drive shaft (2), arranged at the other end of the grinding arm (1), by a belt (8) running through the grinding arm (1), and is arranged on a grinding spindle (11) which is pivotably mounted with its bearings (13) on the grinding arm (1), characterised in that the belt (8), in each case by means of a belt pulley (4, 7), connects the drive shaft (2) to an intermediate shaft (6) mounted in the front end of the grinding arm (1), and in that the grinding wheel (12) can be driven from the intermediate shaft (6) via a gear pair (9, 10) and is mounted on the grinding arm (1) in such a way as to be pivotable about the axis of rotation of the intermediate shaft (6).

2. Grinding head according to Claim 1, characterised in that the belt (8) is designed as a toothed belt.

3. Grinding head according to Claim 1 or 2, characterised in that the gears (9, 10) are designed as helical gears.

4. Grinding head according to Claim 1 or 2, characterised in that the gears (9, 10) are designed as bevel gears.

5. Grinding head according to at least one of Claims 1 to 4, characterised by fresh-oil cooling supplying the bearings (5, 13) of the intermediate shaft (6) and of the grinding spindle (11) as well as the gears (9, 10) with cooling oil by compressed air.

## Revendications

1. Tête de meulage destinée à la fabrication de profils internes, en particulier de dentures hélicoïdales intérieures, comprenant un disque de meulage (12) qui est monté à l'extrémité avant d'un bras de meulage (1) en forme de barre selon l'angle d'inclinaison correspondant du profil interne à réaliser, qui est entraîné, par l'intermédiaire d'une courroie (8) traversant le bras de meulage (1), par un arbre d'entraînement (2) monté à l'autre extrémité du bras de meulage (1), et qui est monté sur une broche porte-meule (11) agencée de manière pivotante sur le bras de meulage (1) avec ses paliers (13), caractérisée en ce que la courroie (8) relie, au moyen de deux poulies (4, 7), l'arbre d'entraînement (2) à un arbre intermédiaire (6) monté dans l'extrémité avant du bras de meulage (1), et en ce que le disque de meulage (12) est entraîné par l'arbre intermédiaire (6) par l'intermédiaire d'une paire de roues dentées (9, 10) et est monté sur le bras de meulage (1) de manière pivotante autour de l'axe de rotation de l'arbre intermédiaire (6).

2. Tête de meulage selon la revendication 1, caractérisée en ce que la courroie (8) est conçue sous la forme d'une courroie dentée.

3. Tête de meulage selon la revendication 1 ou 2, caractérisée en ce que les roues dentées (9, 10) sont conçues sous la forme de roues à denture hélicoïdale.

4. Tête de meulage selon la revendication 1 ou 2, caractérisée en ce que les roues dentées (9, 10) sont conçues sous la forme de roues coniques.

5. Tête de meulage selon au moins une des revendications 1 à 4, caractérisée par un refroidissement par huile qui, au moyen d'air comprimé, alimente en huile fraîche les paliers (5, 13) de l'arbre intermédiaire (6) et de la broche porte-meule (11) ainsi que les roues dentées (9, 10).
